# EUROPEAN PATENT APPLICATION

(11) **EP 4 786 989 A1**
(43) Date of publication of application: **05.08.2026**
(21) Application number: 26154846.5
(22) Date of filing: 28.01.2026
(51) Int. Cl.: G01P 3/48, G01P 3/44, G01H 1/00

(54) **ROTATION SPEED DETERMINATION USING SENSOR VIBRATION DATA**

(30) Priority: 31.01.2025 US 202563752388 P; 04.11.2025 US 202519379140
(71) Applicant: Tractian Technologies Inc, Atlanta, GA 30363 (US)
(72) Inventor: Moraes Coraça, Eduardo, São Paulo (BR); Pedro de Carvalho Voltani, João, São Paulo (BR)
(74) Representative: AtlantIP International

(57) **Abstract**

An automated maintenance, monitoring and diagnostics infrastructure can include small, portable monitors, which can be attached to industrial machines in a plant. The monitors include wireless communication facilities and an accelerometer, capable of measuring vibration signals. Various software models of the infrastructure rely on expected machine RPM values, as reported by the client of the infrastructure, or by other sources, to perform automated monitoring and diagnostics. Embodiments include a rotation speed estimator (RSE) or an RPM encoder, which can generate an estimated RPM value of an industrial machine, from the vibration signals, reported by the accelerometer of the monitors attached to those industrial machines. The estimated RPM values can improve the performance of the software models of the infrastructure.

## Description

### CROSS-REFERENCE TO RELATED APPLICATIONS

This application claims the benefit of priority to U.S. Provisional Application No. 63/752,388, filed on January 31, 2025, and to U.S. Provisional Application No. 63/741,696, filed on January 3, 2025, and titled ROTATION SPEED DETERMINATION USING SENSOR VIBRATION DATA," which are hereby incorporated by reference in their entirety.

### BACKGROUND

### Field

This invention relates generally to the field of signal processing and more particularly to estimating rotation speed of an industrial machine from vibration signal data.

### Description of the Related Art

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Industrial plants can include numerous mechanical machines with thousands of moving parts. To increase the efficiency of plant operations, the machines can be monitored for maintenance purposes. Monitoring can include a trained technician visually inspecting the machines, observing the machine operations, and listening for any abnormal auditory cues that can indicate a present or potential maintenance-related fault in the machines. The technicians can also perform more sophisticated diagnosis, using maintenance and diagnostic tools. Continuous monitoring of industrial machines can present operational inefficiencies and cost to an industrial plant, particularly as the number of machines can be substantial in an industrial plant. For these and similar reasons, plants or busy shops with mechanical machines can benefit from an automated maintenance infrastructure. The automatic maintenance infrastructure can continuously collect maintenance-related data from various machines, detect maintenance-related events, and recommend appropriate action.

Maintenance and diagnostics software typically rely on receiving a correct revolutions-per-minute (RPM) value for an industrial machine, having a rotating element, in order to provide reliable diagnostics data. The RPM value can be provided by an owner/operator of the industrial machine, or manually measured. In some cases, specific hardware devices tailored to measuring RPM can be installed on an industrial machine. Existing methods of receiving an RPM value for an industrial machine can be unreliable, cumbersome or add additional cost and complexity to maintenance and monitoring operations. Consequently, there is a need for a robust method to obtain an RPM value of an industrial machine, without the drawbacks of the existing methods.

### SUMMARY

The appended claims may serve as a summary of this application. Further areas of applicability of the present disclosure will become apparent from the detailed description, the claims, and the drawings. The detailed description and specific examples are intended for illustration only and are not intended to limit the scope of the disclosure.

### BRIEF DESCRIPTION OF THE DRAWINGS

These drawings and the associated description herein are provided to illustrate specific embodiments of the invention and are not intended to be limiting.
FIG. 1A illustrates example diagrams of a monitor, industrial machines, and an infrastructure of fault monitoring and maintenance operations according to some embodiments.
FIG. 1B illustrates an exploded view of the monitor of the embodiment of FIG. 1A.
FIG. 2 illustrates a diagram of an example diagnostic workflow, according to an embodiment.
FIG. 3 illustrates an environment of a rotation speed estimator (RSE), according to an embodiment.
FIG. 4 illustrates example graphs of a vibration signal, vibration signal spectrum, fundamental frequency H1, harmonics of H1, and sidebands of H1.
FIG. 5 illustrates diagrams of components of the RSE, directed to identifying an intermediary candidate fundamental frequency H1 for a vibration signal spectrum.
FIG. 6 illustrates a process of autocorrelation, employed by a sideband detection module (SDM), according to an embodiment.
FIG. 7 illustrates a diagram of additional components of the RSE, according to an embodiment.
FIG. 8 illustrates a flowchart of a method of estimating harmonics series of a spectrum.
FIG. 9 illustrates a flowchart of a method of estimating the sidebands in a spectrum.

### DETAILED DESCRIPTION

The following detailed description of certain embodiments presents various descriptions of specific embodiments of the invention. However, the invention can be embodied in a multitude of different ways as defined and covered by the claims. In this description, reference is made to the drawings where like reference numerals may indicate identical or functionally similar elements. Some of the embodiments or their aspects are illustrated in the drawings.

Unless defined otherwise, all terms used herein have the same meaning as are commonly understood by one of skill in the art to which this invention belongs. All patents, patent applications and publications referred to throughout the disclosure herein are incorporated by reference in their entirety. In the event that there is a plurality of definitions for a term herein, those in this section prevail. When the terms "one", "a" or "an" are used in the disclosure, they mean "at least one" or "one or more", unless otherwise indicated.

For clarity in explanation, the invention has been described with reference to specific embodiments, however it should be understood that the invention is not limited to the described embodiments. On the contrary, the invention covers alternatives, modifications, and equivalents as may be included within its scope as defined by any patent claims. The following embodiments of the invention are set forth without any loss of generality to, and without imposing limitations on, the claimed invention. In the following description, specific details are set forth in order to provide a thorough understanding of the present invention. The present invention may be practiced without some or all of these specific details. In addition, well known features may not have been described in detail to avoid unnecessarily obscuring the invention.

In addition, it should be understood that steps of the exemplary methods set forth in this exemplary patent can be performed in different orders than the order presented in this specification. Furthermore, some steps of the exemplary methods may be performed in parallel rather than being performed sequentially. Also, the steps of the exemplary methods may be performed in a network environment in which some steps are performed by different computers in the networked environment.

Some embodiments are implemented by a computer system. A computer system may include one or more processors, one or more memory devices, and one or more non-transitory computer-readable storage medium. The memory and non-transitory storage medium may store instructions, that when executed by the one or more processors perform the methods and steps described herein.

Industrial machines can benefit from consistent and accurate fault monitoring with artificial intelligence processing of the monitored data. In some embodiments, a plurality of small monitor assemblies, each equipped with wireless communication circuitry can be attached to various industrial machines in a plant. The monitors can sense and report various operational parameters related to fault monitoring. For example, temperature and vibration can be monitored and reported. The quality of vibrations, vibration trend data and other characteristics can be indicators of fault occurring or developing in an industrial machine. Similarly, temperature and temperature trends of a machine can include indicators of occurring or upcoming faults in the machine.

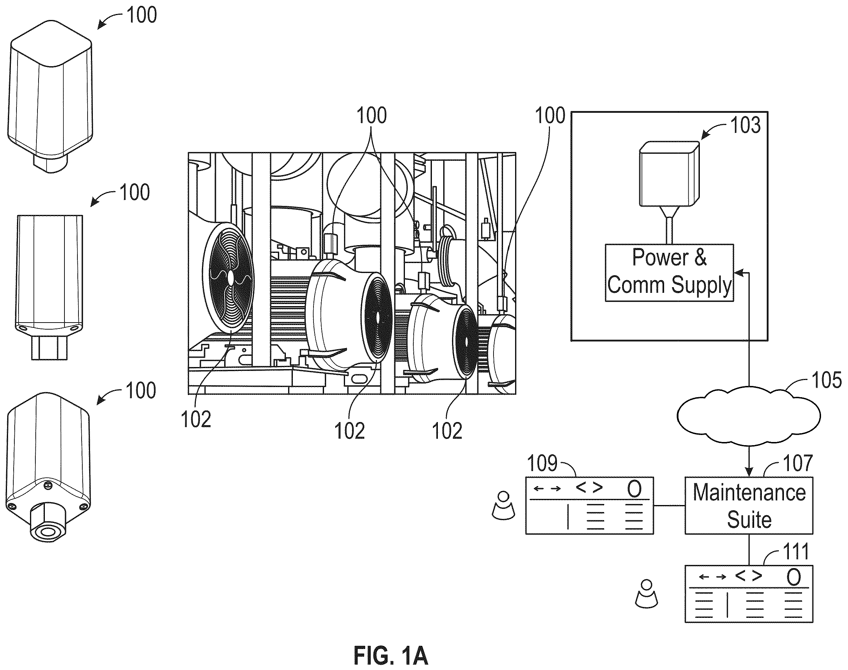

FIG. 1A illustrates example diagrams of a monitor 100, industrial machines 102, and an infrastructure of fault monitoring and maintenance operations according to some embodiments. The monitor 100 can be battery operated and can include a variety of sensing components enclosed in a housing. The monitor 100 can attach to machines 102 in the plant using a magnetic connection and/or by using other methods of attachment and fastening to secure the monitors 100 to machines 102 in the plant. The attachment of the monitors 100 to machines 102 can depend on the magnitude of the vibrations and other considerations related to the environment of the machines 102 and the plant. For example, if larger magnitude vibrations are expected, the connection between the monitors 100 and the machines 102 can be secured with an adhesive agent, so the monitors 100 can maintain their connections to the machines 102, despite large vibrations.

The monitors 100 can include wireless communication circuitry and can be in wireless communication with one or more receivers 103. In some embodiments, one or more monitors 100 can be modified to be in wired communication with a receiver 103 and have a connection to an outlet source of power. In other words, the source of power and type of communication of the monitors 100 can be modified, depending on the application and the environment of the plant to include any combination of battery-operated, outlet-operated, wired communication, and wireless communication. Similarly, the receivers 103 can include both wired and wireless communication circuitry. The receivers 103 can also be powered with or without the use of a battery. In some embodiments, both the monitors 100 and the receivers 103 can wirelessly communicate to a portable computer, such as a laptop, a smart phone, a smart tablet, or other portable devices, in the field, using a local or cellular wireless network. Although the term receiver is used, the receivers 103 can also send data to monitors 100. Consequently, receivers 103 can be transceiver devices. For example, a receiver 103 can send a configuration file to a monitor 100 to enable, disable or otherwise configure various operating parameters of the monitor 100.

Both monitors 100 and receivers 103 can include processing and communication circuitry. For example, both monitors 100 and receivers 103 can include microprocessors, permanent and impermanent memory devices, and transceivers or equivalent devices. Monitors 100 and receivers 103 can perform various data processing when transmitting and/or receiving sensor data, and/or instructions and specifications data, related to their respective operations.

The numbers and locations of the receivers 103 can depend on the size of the plant and the numbers and distances of the monitors 100, relative to the receiver 103 and the wireless communication technology used to communicate between the monitors 100 and the receiver 103. The receivers 103 can be mounted at various locations in a plant and can have connection to a power and a communication source. For example, the receivers 103 in a plant can be in wired and/or wireless communication to one or more communication portals 105. Example communication portals 105 can include a local network, the Internet, one or more cloud infrastructures, gateways, other receivers 103, and other communication midpoints, or endpoints. The receivers 103 can transmit the fault monitoring data for upstream processing. The receivers 103 can also receive various operational configuration files, settings files, and/or other operating parameters and can transmit the operating parameters to the monitors 100. Examples operating parameters can include various timing and frequency of when and how the monitors 100 should collect data from the machines 102.

A maintenance suit 107 can receive monitoring data from the monitors 100 and perform processing related to fault monitoring and maintenance operations on the data. The maintenance suite 107 can include a variety of submodules and databases that can support processing of the monitoring data, including, storage of the data, generating reports from the data, extracting trends from the data, generating fault prediction from the data, generating maintenance action items, tickets, generating alerts, and/or other automated actions related to the maintenance of the machines 102. In some embodiments, the operations of the maintenance suite 107 can include artificial-intelligence submodules that can assist in fault prediction, maintenance recommendation pattern and trend detection, and other data analytics action, augmented or generated by artificial intelligence models. Example artificial intelligence techniques and/or models used by maintenance suite 107 can include neural networks, deep neural networks, machine learning, convolutional neural networks (CNNs), random forests, and others.

The maintenance suite 107 can support a variety of user interfaces (UIs). For example, the maintenance suite 107 can support a frontend user interface 109 and a backend user interface 111. Various parameters related to the operation of the monitors 100 can be viewed and/or modified via the user interfaces 109, 111. The user interfaces 109, 111 can provide access for a user to generate or modify configuration files, settings and operating parameters for the monitors 100 and the maintenance suite 107. The users can also view the output of the maintenance suite 107 via the user interfaces 109, 111. In some implementations, a user who is a customer of the maintenance suite 107, for example, a plant maintenance department, can have access to the maintenance suite 107 via the frontend user interface 109, while the administrators and engineers of the maintenance suite 107, can internally access the maintenance suite 107, via the backend user interface 111.

While not shown, the monitors 100 are not the only maintenance-related in-field components operated by the maintenance suite 107. Other components associated with monitoring and maintenance of the machines 102 and the plant can also be in communication with the maintenance suite 107. For example, in some embodiments, energy management components, in communication with the maintenance suite 107, can monitor the power consumption of the machines 102 and the plant.

Depending on the size of an industrial plant, the monitors 100 can be numerous, for example in the hundreds or thousands. The maintenance suite 107 can streamline and track data from hundreds or thousands of machines 102 and automate the identification and tracking of maintenance-related tasks for a large industrial plant, having hundreds or thousands of machines 102.

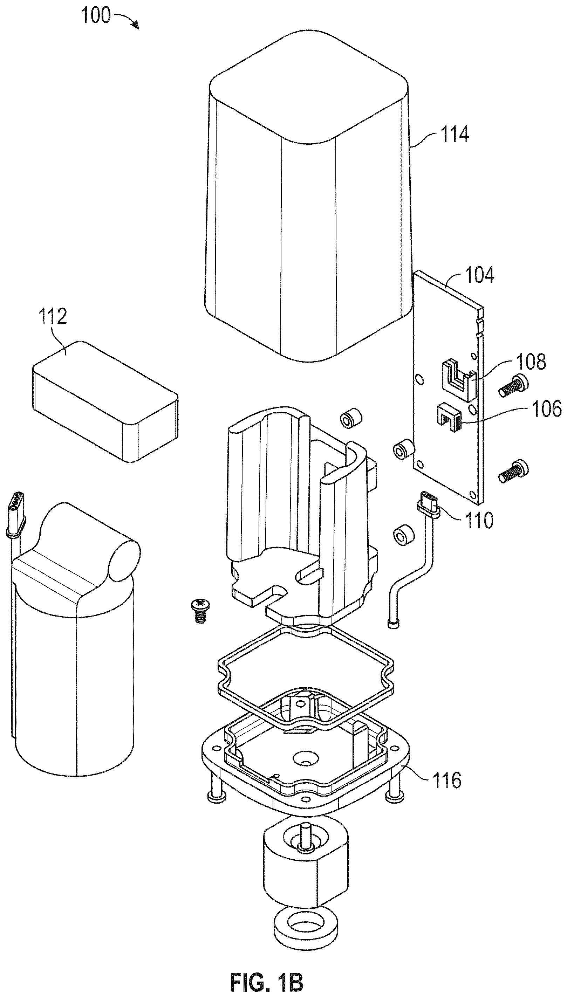

FIG. 1B illustrates an exploded view of a monitor 100. Some example components include the printed circuit board (PCB) 104, the microcontroller 106, an accelerometer 108, a temperature sensor 110, a battery module 112, various spacers, holders, internal conduits, and a housing 114. The housing 114 can house the internal components of the monitor 100. A housing lid 116 can enclose the housing 114 and seal the internal components of the monitor 100 from the outside. The monitor 100 can be made water-, dust- and particle-resistant by a variety of techniques. For example, in some implementations, the monitor 100 can be resin-coated. The battery module 112 can include one or more lithium-ion batteries, and a battery management system (BMS). In other embodiments, the BMS can be external to the battery module 112, for example, it can be mounted on the PCB 104. In some embodiments, the life expectancy of the battery module 112 can be between three to five years. In some embodiments, the monitor 100 can be manufactured using application-specific integrated circuit (ASIC) technology, in lieu of or in addition to using a PCB technology.

The monitor 100 can include communication circuitry, corresponding to the communication circuitry of one or more receivers, for example, the receivers 103, and one or more local, private and/or public communication network, including one or more cellular networks. The choice of network and communication circuitry can depend on the size of the plant and the distance of the monitor 100 from a receiver 103. The communication circuitry of the monitor 100 can be mounted on the PCB 104. In some embodiments, the communication circuitry may be integrated in the microcontroller 106. Similarly, in other embodiments, various components can be combined into one or use a component that integrates several components together. On the other hand, some components, for example, the communication circuitry of the monitor 100, can be a separate module, embedded on the PCB 104, or otherwise separately included in the monitor 100. In some embodiments, the communication circuitry of the monitor 100 can include a transceiver, as an independent component, or as an internal component of another component, such as the microcontroller 106. The microcontroller 106 can alternatively be referred to as a microprocessor or as a processor. In some implementations, the microcontroller 106 can include a plurality of processors. The monitor 100 can include a magnetic collar to provide magnetic attachment between the monitor 100 and the machine 102. In some embodiments, the temperature sensor 110 can be routed to a surface very near the point of contact between the monitor 100 and the machine 102 to provide a more accurate reading of the temperature of the machine 102.

The accelerometer 108 can be a micro-electro-mechanical system (MEMS) accelerometer, capable of one, two, or three axis acceleration data. For example, in some embodiments, the accelerometer 108 can measure forces in three directions along the XYZ axes. The accelerometer 108 can measure and transmit both magnitude and spectral data of the vibrations of a machine 102 to the microcontroller 106. Consequently, the accelerometer 108 is capable of collecting the machine vibrations of the machine 102 in three directions, along the x-axis, the y-axis and the z-axis.

The microcontroller 106 can be a collection of various components, including computer or computing components. Example components of the microcontroller 106 can include a processor, or a microprocessor, such as a central processing unit (CPU), permanent and impermanent memory, including for example, random access memory (RAM) of various kinds, solid state, flash or other permanent memory, interconnects, buses and communication vias between the various components. In some embodiments, the microcontroller 106 can include external communication circuitry to enable wireless communication, including radio frequency identification (RFID), Bluetooth, cellular, or other communication technologies. In other embodiments the monitor 100 can include dedicated wireless communication circuitry, fabricated or included in the monitor 100, in a separate component than the microcontroller 106.

The monitors 100 can be configured to spend the majority of their time in hibernation state to conserve battery power. In hibernation mode, the power to all or some of the components of the monitor 100 can be reduced or minimized, thereby reducing the overall battery consumption in the hibernation state. The monitors 100 can be configured to periodically exit hibernation mode and enter normal operation mode, where power and functionality to some or all components is restored. For example, the monitors 100 can perform periodic sampling of various operational parameters of the machines 102, such as temperature and vibrations. When scheduled sampling is not performed, the monitors 100 can be in hibernation mode. As an example, a monitor 100 can collect vibration data for two-minutes at every ten-minute intervals. Frequency of sampling is an example of the operational specification and parameters that can be specified and used to configure the monitor 100, accordingly.

The monitors 100 can perform a variety of samplings of machine operation parameters. For example, for the vibration parameter of the machines 102, the monitors 100 can perform various samplings at different intervals and with different characteristics. Example sampling characteristics can include sampling intervals, sampling frequency, sampling rate, sampling range, sampling resolution and other characteristics. Sampling interval can refer to the period by which the monitor 100 turns ON and performs a sampling with a selected set of sampling characteristics. In some embodiments, the monitors 100 can be configured to perform scheduled sampling sessions, which are samplings performed at selected intervals. The selected intervals can depend on the type of machines 102 and other factors that are application-dependent, based on where the monitors 100 are used. Example sampling intervals can include sampling with intervals separated by minutes, hour or hours, days, or even months, and other intervals.

The monitor 100 is a battery-operated device. In most applications extending the longevity of the monitor 100 is proportional to the longevity of the battery module 112. A significant portion of the battery consumption of the monitor 100 relates to the transmission of data to the receiver 103. In some implementations of the described infrastructure, the monitor 100 can compress sensor data, and transmit a compressed data structure to the receiver 103, in order to increase the reliability of transmission and to reduce the battery consumption of the monitor 100.

For machines 102 that have a rotating motor element, maintenance and monitoring models and algorithms often rely on the rotation speed of the rotating element (e.g., the motor) to perform modeling and diagnostic. While the maintenance and monitoring models and algorithms rely on period measurements of the machine vibrations detected and reported by the monitor 100, they also rely on the rotation speed of the machine 102 to perform modeling and diagnostic. The rotation speed can be expressed in terms of rotations per minute (RPM), which can be provided manually, via for example, the user interface 109.

Vibration diagnostic solutions consider that the machine 102 is operating at a constant speed throughout the vibration measurement, which enables performing various signal processing operations, such as Fourier Transform, in order to divide the vibration signal, in terms of individual contributions of single frequency harmonic components. Such analysis can be useful for diagnostic models that can use the vibration signal for detecting specific component failures. For example, a component in the vibration signal with high amplitude can be related to a specific element of the machine, such as a gear, a bearing, the shaft or blades of a bladed machine. In these types of analysis and also in general failure analysis, the maintenance and monitoring models and algorithms rely on a rotation speed parameter. The rotation speed parameter can be expressed in units of Hertz and is related to the RPM (Rotation speed = 60 x RPM).

A client can inform the RPM of a machine 102 at the platform (e.g., via the user interface 109), but some machines 102 can run at different speeds (*e.g.*, 1800 RPM or 3600 RPM, depending on the material being processed by the machine 102). Although it is possible to receive a range of operation speeds from the client, that information alone, in some cases, may not be enough for performing robust diagnostics. Also, in some cases, the RPM might not be known by the client, or even a wrong value may be provided at the platform, which can lead to wrong diagnostics. Therefore, having a correct RPM value of the machine 102 can improve the reliability of maintenance and monitoring models and algorithms. Solutions to measure the RPM exist, but in many cases they rely on another piece of hardware (*e.g*., Optical Encoders, and Magnetic Speed Sensors), leading to increased costs and installation issues. Therefore, there is a need for measuring or estimating the rotation speed of a machine 102, without adding more hardware complexity.

A vibration signal, measured by monitor100, carries information about the rotation speed of the machine 102, that could be leveraged for rotation speed and RPM estimation. A rotation speed estimator (RSE) can predict an RPM value for a machine 102, from the vibration signal, measured by the accelerometer 108 of the monitor 100.

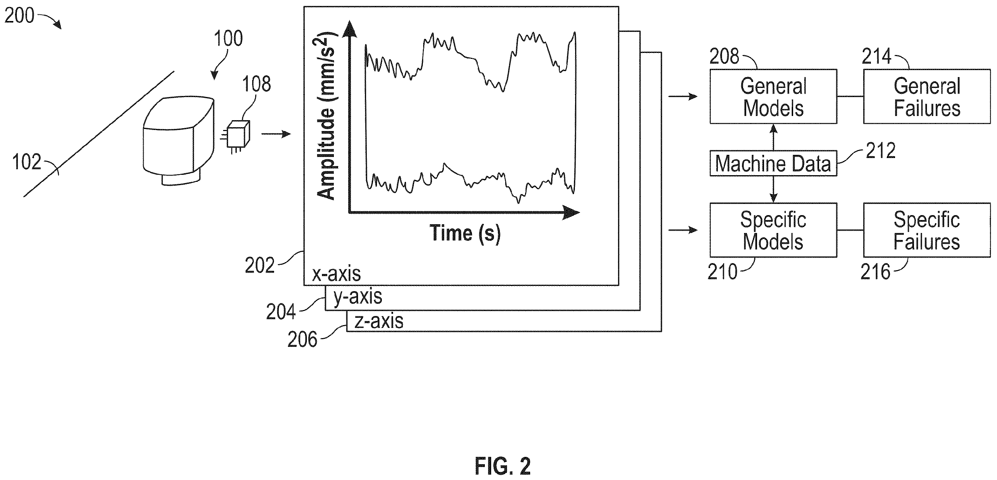

FIG. 2 illustrates a diagram 200 of an example diagnostic workflow, according to an embodiment. The monitor 100 includes an accelerator 108, which can measure movements of the machine 102 in three directions, along the standard Cartesian coordinate system, the x-axis, the y-axis and the z-axis (the horizontal, the vertical and the depth, respectively). The accelerometer 108 measures and reports x-axis, y-axis and z-axis vibration signals 202, 204, 206. The vibration signals can be received by general models 208, which process the vibration signals and report general failures 214 about the machine 102. General failures 214 may include general diagnostic alerts that do not necessarily flag specific component failures. The vibration signals can also be received and processed by specific models 210, which can report specific failures 216 about the machine 102. Specific failures 216 may include diagnostic alerts flagging specific components of the machine 102. Both general and specific models 208, 210 can rely on machine data 212 to perform diagnostics. Machine data 212 can include machine expected operation specification and parameters, as provided by the manufacturer of the machine 102, an owner or operator of the machine 102, and/or from other sources external to the models 208, 210. The machine data 212 can include RPM data.

As described earlier, relying solely on external or manual machine data 212 to perform diagnostics can be problematic when the operator of the machine 102 (*e.g.*, a client of a maintenance and monitoring infrastructure), does not have the correct RPM information, or the real RPM information drifts, relative to the expected RPM value, as the machine 102 ages. In some scenarios, a real time RPM information is more accurate and more useful for performing diagnostics, than a constant and fixed RPM value defined when setting up the profile of the machine 102 in a maintenance and monitoring infrastructure. In these and similar scenarios, utilizing and estimated RPM can be beneficial. While the RPM may not be directly measured, the rotation speed and RPM can be derived from the vibration signals 202, 204, 206.

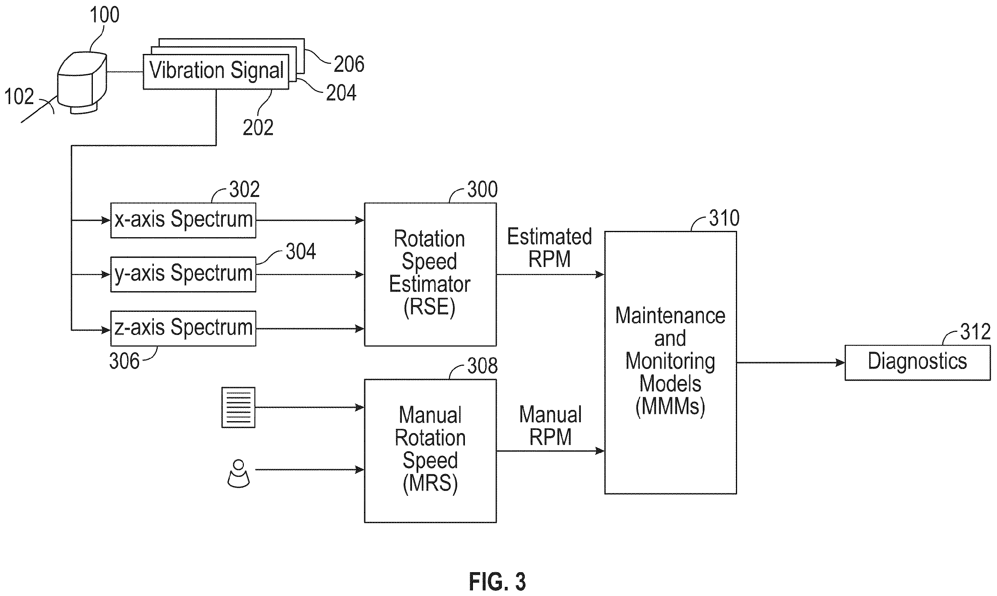

FIG. 3 illustrates an environment 300 of a rotation speed estimator (RSE) 300, according to an embodiment. The monitor 100 can generate vibration signals 202, 204, 206. In some examples, the vibration signals can be graphed in an amplitude versus time graph. In other words, the vibration signals 202, 204, 206 are in time domain. Additional components internal or external to the monitor 100 can convert the vibration signals 202, 204, 206 into their respective vibration signal spectrums in frequency domain. Vibration signal spectrums can include x-axis spectrum 302, y-axis spectrum 304, and z-axis spectrum 306. The RSE 300 can process the vibration signal spectrum and generate an estimated RPM. The client or operator of the machine 102 can also provide a manual rotation speed (MRS) value, or a manual RPM. The estimated RPM and the manual RPM can be provided to maintenance and monitoring models (MMMs) 310, which can use the RPM values to provide diagnostics 312. In some embodiments, the RSE 300 can alternatively be referred to as an "RPM encoder."

The RPM Encoder operates based on three premises regarding how the machine RPM is reflected in the vibration signal spectrums. First, the rotation of a shaft element of the machine 102 generates a sinusoidal vibration at a frequency that is equivalent to the running speed of the machine 102. For example, if the machine 102 rotates at 1800 RPM, there is a peak at a vibration spectrum with relevant energy at 30 Hz. Second, in many cases, but not always, there are harmonics at a vibration spectrum, that is peaks at frequencies that are integer multiples of a fundamental frequency, which also corresponds to the running speed of the machine. The fundamental frequency in this context can be denominated as H1. Third, in some cases, there are sidebands at a vibration spectrum as the result of amplitude modulation. This usually occurs at higher frequencies.

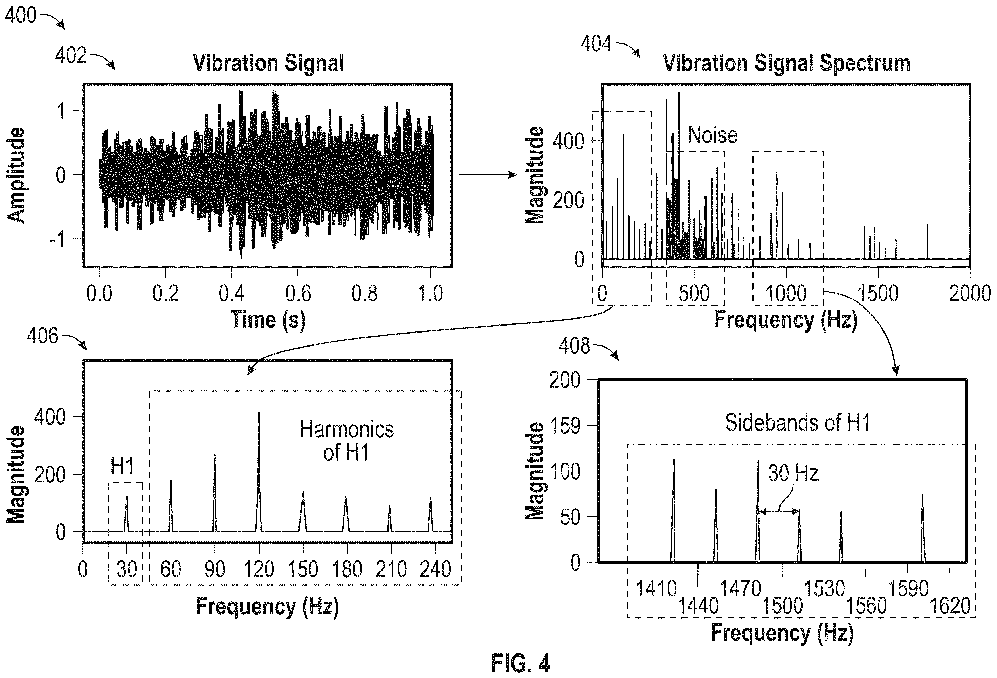

FIG. 4 illustrates example graphs 400 of a vibration signal, vibration signal spectrum, fundamental frequency H1, harmonics of H1, and sidebands of H1. Graph 402 illustrates a vibration signal, which can be an example of one of the vibration signals 202, 204, 206. The vibration signal, shown in graph 402 is in time-domain. Graph 404 shows a vibration signal spectrum, which can be generated from the vibration signal shown in graph 402. The vibration signal spectrum 404 in in frequency-domain. Graph 406 illustrates the fundamental frequency H1, occurring at 30 Hz and harmonics of H1, which occur at integer multiples of the fundamental frequency H1. The fundamental frequency H1 and the its harmonics tend to occur in the lower frequencies (*e.g*., 0-240 Hz in the example shown). Graph 408 illustrates the sidebands of the fundamental frequency H1, which tend to occur at higher frequencies (*e.g*., 1410-1620 Hz in the example shown).

The RSE 300 can receive a spectrum, for example, one of the vibration signal spectrums 302, 304, 306 and can perform peak detection operations, harmonics detection operations, and sideband detection operations. The results of these operations can be combined to generate a candidate fundamental frequency H1 for the input vibration signal spectrum.

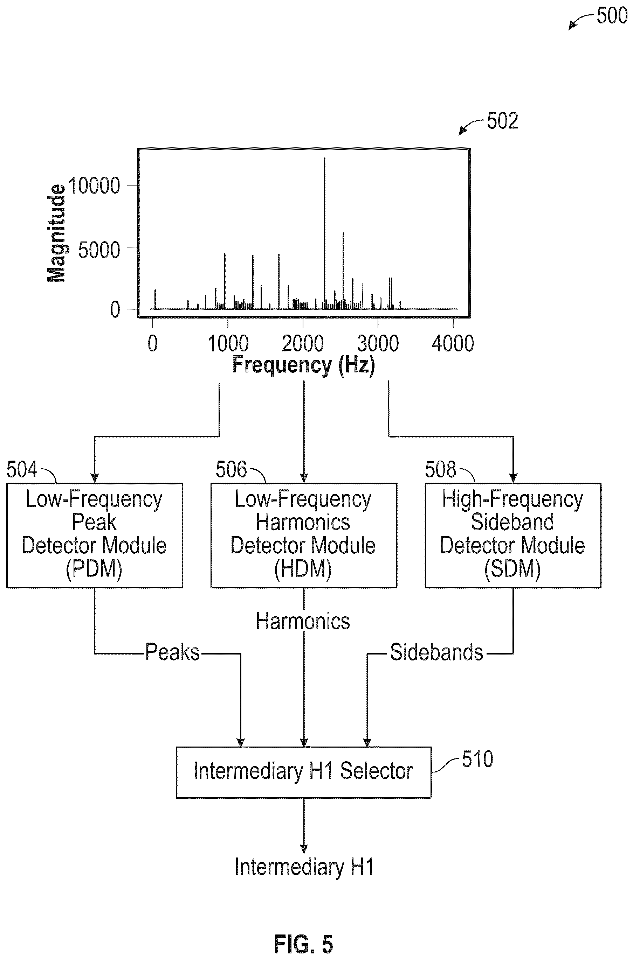

FIG. 5 illustrates diagrams 500 of components of RSE 300, directed to identifying an intermediary candidate fundamental frequency H1 for a vibration signal spectrum. The spectrum 502 can be one of the vibration signals spectrums 302, 304, 306. The spectrum 502 can be processed by a low-frequency peak detector module (PDM) 504, a low-frequency harmonics detector module (HDM) 506 and a high-frequency sideband detector module (SDM) 508.

The PDM 504 can use a variety of techniques to determine peaks in the spectrum 502. Some PDM 504 techniques include selecting areas from the spectrum 502, where a prominence metric is high. The PDM 504 can detect peaks in the spectrum 502 and provide a vector of peak frequencies to the HDM 506. The PDM 504 can also provide the vector of peak frequencies, as candidates for fundamental frequency H1 to an intermediary H1 selector 510.

The HDM 506 can identify harmonic families from the vector of peak frequencies detected by the PDM 504, from the input spectrum 502. The HDM 506 can treat each peak frequency in the vector of peak frequencies as a candidate fundamental frequency H1. For each candidate, the HDM 506 can calculate the ratios between the remaining peak frequencies and the candidate frequency, generating a ratios vector for each peak frequency. For example, if the vector of peak frequencies is [30.73, 60.26, 89.77, 119.9, 150.02], the ratios vector for peak frequency 60.26, as the candidate fundamental frequency H1, is [0.51, 1.0, 1.49, 1.99, 2.49]. The HDM 506 can generate the ratios vector for other peak frequencies.

Next, the harmonics distances, defined as the difference between a ratio and the closest integer to the ratio, is computed for each ratio in each ratios vector, generating a harmonics distances vector for each peak frequency. For example, the harmonics distances vector for the peak frequency 60.26 is [0.49, 0, 0.49, 0.01, 0.49]. In this manner, the HDM 506 can generate a vector of harmonic distances for each peak frequency.

Next, the peak frequencies with low harmonics distances represent an integer multiple, or a harmonic of the candidate fundamental frequency H1. The determination of which harmonic distances are "low," can be a threshold-based approach. For example, in some embodiments, the threshold value of "0.2" can be used. A harmonic series is the closest ratio integer, derived from the ratios vector, for which the corresponding harmonic distance is "low," based on the selected threshold. Zeros can be assigned to harmonic series for which the harmonic distances are high. For example, for the peak frequency 60.26, and the threshold value of "0.2," the harmonic series is [0,1, 0, 2, 0]. Stated otherwise, a harmonic series vector for a candidate fundamental frequency H1 can be derived by, generating a ratios vector, determining a vector of closest integers, based on the elements of the ratios vector, generating a harmonics distances vector (by obtaining the absolute difference between the ratios vector and the closest integers vector), and generating a harmonics series vector, from the harmonics distances vector by replacing every element, which is above the threshold with zeros, and every element that is equal or below the threshold with the corresponding closest integer from the closest integers vector. For example, for the peak frequency 60.26, the ratios vector is [0.51, 1, 1.49, 1.99, 2.49], the closest integers vector is [1, ,1, 1, 2, 2], and the harmonics distances vector is [0.49, 0, 0.49, 0.01, 0.49]. The second and fourth distances are less than the selected threshold of 0.2. The corresponding values in the harmonics series vector for these distances, is the same values as in the closest integers vector (1, and 2). The remaining distances are above the selected threshold. Consequently, the corresponding values in the harmonics serries vector are zeros. Therefore, the harmonics series vector for the candidate frequency 60.26 is [0, 1, 0, 2, 0]. The process can be repeated for other candidate frequencies, producing a matrix of identified harmonics series. For example, Table (1) illustrates a matrix of identified harmonics series for the peak frequencies in the example above, where each row represents an identified harmonics series for a peak frequency from the vector of peak frequencies in the example described above.

**Table (1)**

| Peak frequencies | Identified harmonics series | | | | |
|---|---|---|---|---|---|
| 30.73 | 1 | 2 | 3 | 4 | 5 |
| 60.26 | 0 | 1 | 0 | 2 | 0 |
| 89.77 | 0 | 0 | 1 | 0 | 0 |
| 119.9 | 0 | 0 | 0 | 1 | 0 |
| 150.02 | 0 | 0 | 0 | 0 | 1 |

Next, the HDM 506 can select the most representative harmonics series by assigning a score to each series, and selecting the harmonics series with the highest score. The score can be adjusted, down (a cost measure), based on the number of harmonics detected in the series. The HDM 506 can output the peak frequencies corresponding to the highest scored harmonics series to the intermediary H1 selector 510 for determining the intermediary fundamental frequency H1 for the spectrum 502. In other words, the most representative harmonics series is selected by assigning a score to each series and selecting the highest one, where the cost is proportional to the number of harmonics detected in the series. For the previous example, the score for each row of the matrix of identified harmonics series can be [2.28, 1.50, 1.0, 1.0, 1.0]. The maximum score occurs for the first row of the matrix, which corresponds to the first frequency from the sequence of peaks or 30.73 Hz. This indicates that the harmonic series beginning at a frequency of 30.73 Hz is the most dominant in the sequence of peaks and is therefore the one selected. While multiple distinct families may exist, this method identifies the most significant one based on a scoring criteria.

The SDM 508 can utilize autocorrelation to detect and/or estimate the sidebands. The SDM 508 detects the period of repetition of a pattern in an input sequence, which in the present application includes a segment of the spectrum. The autocorrelation consists of computing the correlation of an input sequence with a delayed version of itself for several delay factors, providing a sequence of correlation coefficients as a function of the delay factor.

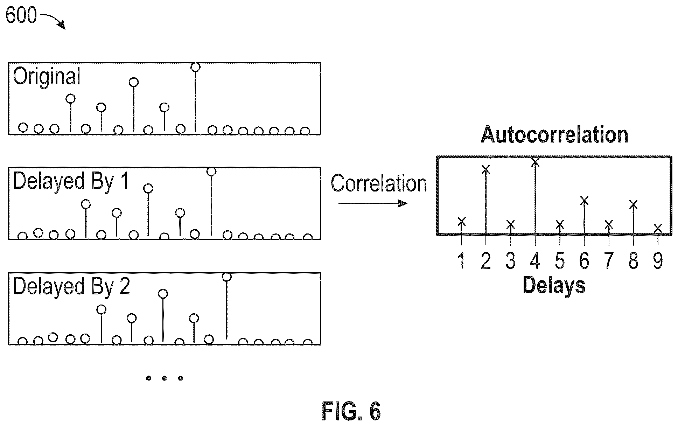

FIG. 6 illustrates a process of autocorrelation, employed by the SDM 508, for an example sequence containing an intrinsic periodicity of one peak for every two samples. The autocorrelation plot highlights the periodicity, which can be concluded from the harmonic series whose fundamental is located at delay "2" from the previous example. When the sequence is a spectrum, such as spectrum 502, the periodicity is given in Hz and represents the frequency spacing between the peaks. In order to determine the periodicity with higher certainty, the HDM 506 can be used, as described above. Autocorrelation, in this context, can be efficiently computed using a fast Fourier transform (FFT) algorithm. The SDM 506 can output candidate sidebands and their corresponding candidates for fundamental frequency H1 to the intermediary H1 selector 510.

The outputs of the PDM 504, the HDM 506, and the SDM 508, the peaks, harmonics, and sidebands, respectively, can be received by an intermediary H1 selector 510, which can select the most probable candidate fundamental frequency H1, for the spectrum 502, given the peaks, the harmonics and the sidebands. The intermediary H1 selector can output an intermediary fundamental frequency H1 for the spectrum 502.

The intermediary H1 selector 510 selects the output intermediary fundamental frequency H1 by performing the following operations. Candidate matches between the outputs of the PDM 504 and the HDM 506 are selected. If there are any matches, the most probable candidate is selected. If no peaks/harmonic matches are found, the intermediary H1 selector 510 searches for peaks/sidebands matches, and the most probable candidate is selected. If no matches are found, the intermediary H1 selector can skip predicting an H1 for the spectrum 502.

To improve reliability, before confirming a match, the intermediary H1 selector 510 can determine whether a corresponding peak in lower frequencies exist related to the harmonics or sidebands predictions. Also, as the spectrums 502 can be noisy and/or contain artifacts due to signal compression, or other factors, the processed sensor axis may not have a valid prediction. In these scenarios the intermediary H1 selector 510 can output no predictions, as opposed to outputting an invalid one.

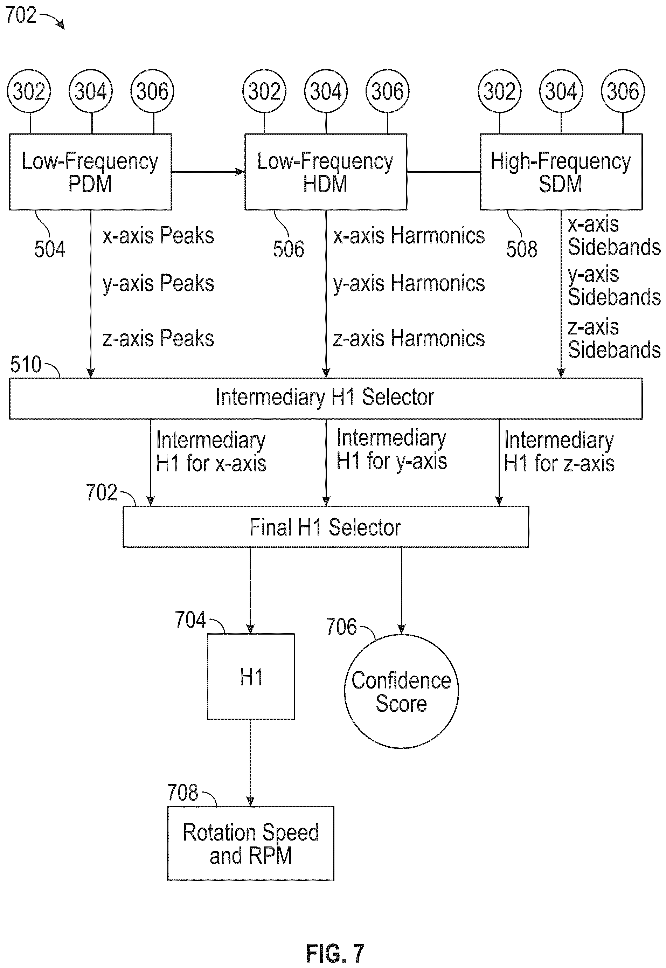

FIG. 7 illustrates a diagram 700 of the components of the RSE 300, shown in diagrams 500, as well as additional components of the RSE 300, according to an embodiment. The components, shown in diagram 500, can be used to produce predictions per axis. For example, predictions of the intermediary H1 for each axis can be obtained. A final H1 selector 702 can use the predictions to generate a final estimated value for the fundamental frequency H1 704, along with a confidence score 706. The estimated fundamental frequency H1 704 can be used to derive a rotation speed and RPM for a machine 102.

The PDM 504, the HDM 506 and the SDM 508 can each receive the x-axis spectrum 302, the y-axis spectrum 304, and the z-axis spectrum 306. The PDM 504 can detect x-axis peaks, y-axis peaks, and z-axis peaks. The HDM 506 can receive the peaks from the PDM 504 and detect x-axis harmonics, y-axis harmonics, and z-axis harmonics. The SDM 508 can detect x-axis sidebands, y-axis sidebands and z-axis sidebands. The intermediary H1 selector 510 can receive the peaks, the harmonics and the sidebands, and generate a prediction for an intermediary H1 value for each axis. The final H1 selector 702 can receive the predictions for each axis and generate a final prediction for a value of H1, based on the intermediary H1 values. In some embodiments, the final H1 selector 702 can also generate a confidence score 706 along with a prediction for the H1. value. The confidence score 706 can be used by the maintenance and monitoring models (MMMs) 310 to determine whether to use an estimated value of H1 704, or an RPM value generated based on an estimated value of H1 704.

The final H1 selector 702 can use various techniques to select an estimated H1 value 704. In some embodiments, the H1 value 704 is the median of the three intermediary H1 values. Other statistical techniques can also be used. The selected H1 704 is the estimated fundamental frequency H1, and can be selected as the rotation speed. Multiplying the selected H1 704 by sixty can yield an estimated RPM value. The final H1 selector 702 can use various techniques to generate the confidence score 706. In some embodiments, the degree to which there is agreement and match between the intermediary H1 values can determine the confidence score 706. For example, if all intermediary H1 values, from all axes, match or nearly match, the confidence score is a high value. If only two intermediary H1 values match or nearly match, the confidence score is a medium value. If only one axis yielded a valid intermediary H1 value, the confidence score is a low value. If no axis yielded a valid intermediary H1 value, or there is no agreement or match between the intermediary H1 values of the three axes, the confidence score is zero.

### Utilizing an expected RPM value or range in RSE 300.

Clients can register the RPM of machine 102 on a technical sheet. The RPM can be steady or variable, specified in terms of a range of minimum and maximum RPM values of the machine 102. The RPM Encoder can use the RPM information in the technical sheet, by restricting the allowable frequency range of the output of the peak detection algorithm, or the PDM 504, which in turn can restrict the final estimated H1 704 to be constrained by the specified range. For example, if the machine 102 has a steady or fixed RPM, according to its technical sheet, the valid search range, employed by the RSE 300, is the frequency range starting at 75% and ending at 125% of the registered steady RPM. When the machine 102 has a variable RPM, according to its technical sheet, the valid search range can start at 90% of the registered range and can end at 110% of the registered range. In other words, various search ranges for the internal modules of the RSE 300 can be based on the expected RPM in the technical sheet. The same RPM information can be obtained, from other sources, such as manufacturer of the machine 102 or other available documentation for the machine 102. Constraining the search space to expected RPM information, as specified by reliable sources, can improve reliability. Reducing the spectrum ranges to be analyzed, or processed can also improve the computational efficiency and performance of the RSE 300.

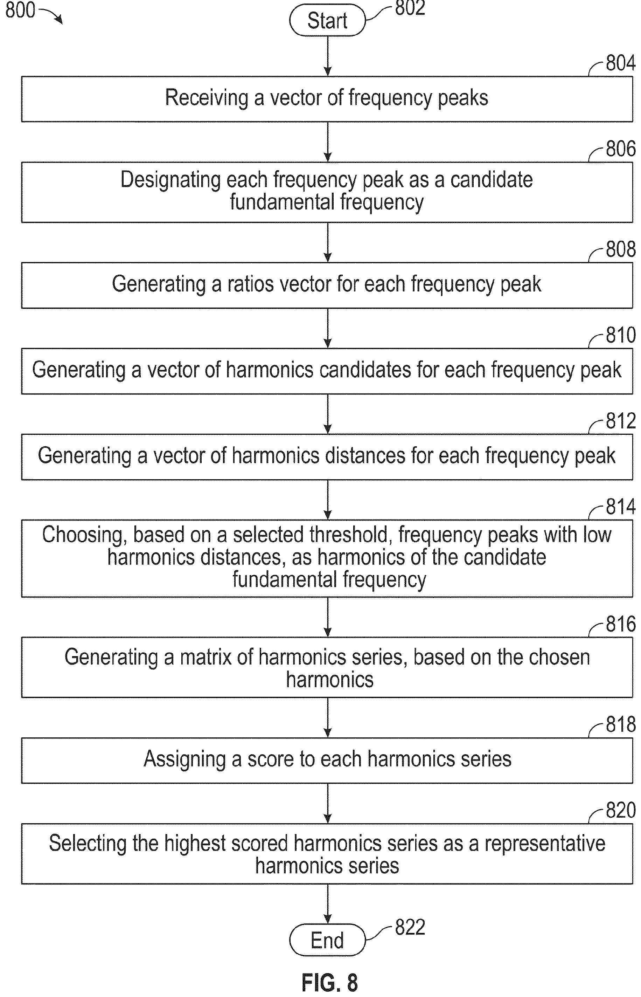

FIG. 8 illustrates a flowchart of a method 800 of estimating harmonics series of a spectrum. In some embodiments, the HDM 506 can implement the method 800. The method starts at step 802. Step 804 includes receiving a vector of frequency peaks. Step 806 includes designating each frequency peak as a candidate fundamental frequency. Step 808 includes generating a ratios vector for each frequency peak. Step 810 includes generating a vector of harmonics candidates for each frequency peak. Step 812 includes generating a vector of harmonics distances for each frequency peak. Step 814 includes choosing, based on a selected threshold, frequency peaks with low harmonics distances, as harmonics of the candidate fundamental frequency. Step 816 includes generating a matrix of harmonics series, based on the chosen harmonics. Step 818 includes assigning a score to each harmonics series. Step 820 includes selecting the highest scored harmonics series as a representative harmonics series. The method ends at step 822.

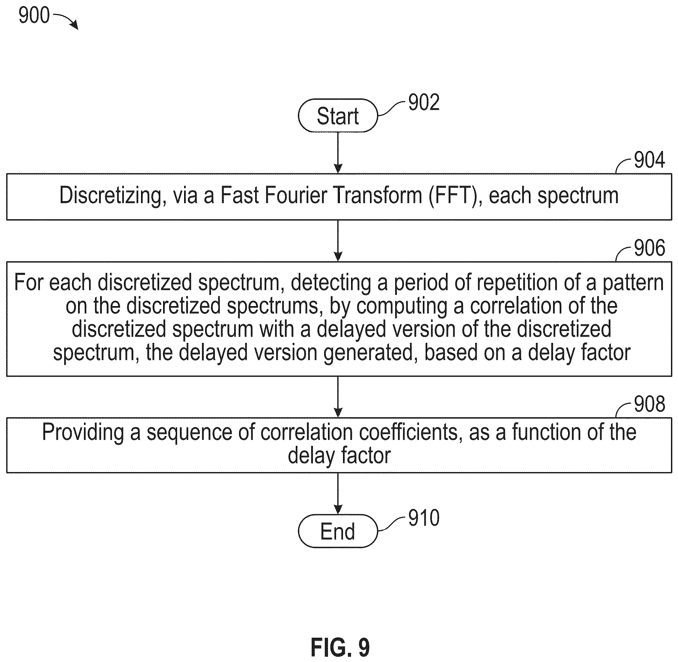

FIG. 9 illustrates a flowchart of a method 900 of estimating the sidebands in a spectrum. In some embodiments, the SDM 508 can implement the method 900. The method starts at step 902. Step 904 includes discretizing, via a fast Fourier Transform (FFT), each spectrum. Step 906 includes, for each discretized spectrum, detecting a period of repetition of a pattern on the discretized spectrums, by computing a correlation of the discretized spectrum with a delayed version of the discretized spectrum, the delayed version generated, based on a delay factor. Step 908 includes providing a sequence of correlation coefficients, as a function of the delay factor. The method ends at step 910.

In some embodiments, the monitor 100 can include a configuration file, which when executed by the microcontroller 106, configures various hardware and software components of the monitor 100, according to the parameters specified in the configuration file. In some embodiments, the configuration file can include one or more acquisition parameters, which can correspond to and configure one or more sensors of the monitor 100 to conduct sensing and monitoring according to the acquisition parameters. The acquisition parameter of a sensor can affect the longevity of the monitor 100, and the robustness of the data collected by the sensor. An increased sensor acquisition time can drain the battery module 112 more quickly, but it can also generate a more robust dataset. An estimated RPM value derived from the output of the RSE 300 can be used to adjust the acquisition parameter of a sensor. For example, an estimated RPM value can indicate which frequencies or frequency ranges, in the spectrum signal acquired from the machine, can yield better data for the maintenance and monitoring models. From the estimated RPM value and the target frequencies, a resolution can be selected. Based on the selected resolution, an acquisition time parameter for a sensor can be selected and used to configure the sensor accordingly. As an example, lower estimated RPM values can indicate that the maintenance and monitoring models can utilize a more robust resolution in the acquired spectrum. Therefore, the acquisition time parameter for the sensor can be increased (*e.g*., from a previous one second value to four or five seconds). Conversely, an estimated high RPM value can indicate that the maintenance and monitoring models can perform well with a less robust spectrum, nonetheless. Therefore, acquisition time can be reduced to conserve the battery module 112.

While the embodiments are described in relation to the available hardware and software components of the maintenance and monitoring infrastructure, the embodiments are not only limited to the environment of the infrastructure. For example, they can be implemented in a computer or a processor environment.

### Examples

It will be appreciated that the present disclosure may include any one and up to all of the following examples.

Example 1: A method comprising:
receiving, from an accelerometer of a monitor, three vibration signals, an x-axis vibration signal, a y-axis vibration signal and a z-axis vibration signal, the monitor attached or in contact with an industrial machine, wherein the movements of the industrial machine, induces movements in the monitor causing the accelerometer to record the three vibration signals, the vibration signals initially received in a time-domain;
converting the vibration signals to frequency domain, generating x-axis spectrum, y-axis spectrum and z-axis spectrum;
for each spectrum, detecting frequency peaks;
for each spectrum, detecting harmonics of the frequency peaks;
for each spectrum, detecting sidebands of the frequency peaks;
for each spectrum, estimating an intermediary fundamental frequency, based on the peaks, harmonics and sidebands of the spectrum, generating x-axis, y-axis, and z-axis intermediary fundamental frequencies;
selecting a fundamental frequency, based on the x-axis, y-axis and z-axis intermediary fundamental frequencies; and
generating a rotation speed parameter, based on the selected fundamental frequency.

Example 2. The method of Example 1 further comprising determining a confidence score, based at least in part on a degree of matching between the intermediary fundamental frequencies.

Example 3. The method of any one of Examples 1-2, further comprising:
designating each frequency peak as a candidate fundamental frequency;
generating a ratios vector for each frequency peak;
generating a vector of harmonics candidates for each frequency peak;
generating a vector of harmonics distances for each frequency peak;
choosing, based on a selected threshold, frequency peaks with low harmonics distances, as harmonics of the candidate fundamental frequency;
generating a matrix of harmonics series, based on the chosen harmonics;
assigning a score to each harmonics series; and
selecting the highest scored harmonics series as a representative harmonics series.

Example 4. The method of any one of Examples 1-3, further comprising:
discretizing, via a fast Fourier Transform (FFT), each spectrum;
for each discretized spectrum, detecting a period of repetition of a pattern on the discretized spectrums, by computing a correlation of the discretized spectrum with a delayed version of the discretized spectrum, the delayed version generated, based on a delay factor; and
providing a sequence of correlation coefficients, as a function of the delay factor.

Example 5. The method of any one of Examples 1-4, wherein detecting frequency peaks, harmonics and sidebands are constrained to a search space in the spectrums, based at least in part on an expected RPM value or range.

Example 6. The method of any one of Examples 1-5, further comprising performing failure analysis on the industrial machine, based at least in part on an RPM value, derived from the generated rotation speed parameter.

Example 7. The method of any one of Examples 1-6, wherein the frequency peaks in the spectrums are detected in lower frequency regions of the spectrums, and the harmonics are detected in the same lower frequency regions, relative to the sidebands detected in higher frequency regions of the spectrums.

Example 8. A non-transitory computer storage media that stores executable program instructions that, when executed by one or more computing devices, configure the one or more computing devices to perform operations comprising:
receiving, from an accelerometer of a monitor, three vibration signals, an x-axis vibration signal, a y-axis vibration signal and a z-axis vibration signal, the monitor attached or in contact with an industrial machine, wherein the movements of the industrial machine, induces movements in the monitor causing the accelerometer to record the three vibration signals, the vibration signals initially received in a time-domain;
converting the vibration signals to frequency domain, generating x-axis spectrum, y-axis spectrum and z-axis spectrum;
for each spectrum, detecting frequency peaks;
for each spectrum, detecting harmonics of the frequency peaks;
for each spectrum, detecting sidebands of the frequency peaks;
for each spectrum, estimating an intermediary fundamental frequency, based on the peaks, harmonics and sidebands of the spectrum, generating x-axis, y-axis, and z-axis intermediary fundamental frequencies;
selecting a fundamental frequency, based on the x-axis, y-axis and z-axis intermediary fundamental frequencies; and
generating a rotation speed parameter, based on the selected fundamental frequency.

Example 9. The non-transitory computer storage media of Example 8, further comprising determining a confidence score, based at least in part on a degree of matching between the intermediary fundamental frequencies.

Example 10. The non-transitory computer storage media of any one of Examples 8-9, further comprising:
designating each frequency peak as a candidate fundamental frequency;
generating a ratios vector for each frequency peak;
generating a vector of harmonics candidates for each frequency peak;
generating a vector of harmonics distances for each frequency peak;
choosing, based on a selected threshold, frequency peaks with low harmonics distances, as harmonics of the candidate fundamental frequency;
generating a matrix of harmonics series, based on the chosen harmonics;
assigning a score to each harmonics series; and
selecting the highest scored harmonics series as a representative harmonics series.

Example 11. The non-transitory computer storage media of any one of Examples 8-10, further comprising:
discretizing, via a fast Fourier Transform (FFT), each spectrum;
for each discretized spectrum, detecting a period of repetition of a pattern on the discretized spectrums, by computing a correlation of the discretized spectrum with a delayed version of the discretized spectrum, the delayed version generated, based on a delay factor; and
providing a sequence of correlation coefficients, as a function of the delay factor.

Example 12. The non-transitory computer storage media of any one of Examples 8-11, wherein detecting frequency peaks, harmonics and sidebands are constrained to a search space in the spectrums, based at least in part on an expected RPM value or range.

Example 13. The non-transitory computer storage media of any one of Examples 8-12, further comprising performing failure analysis on the industrial machine, based at least in part on an RPM value, derived from the generated rotation speed parameter.

Example 14. The non-transitory computer storage media of any one of Examples 8-13, wherein the frequency peaks in the spectrums are detected in lower frequency regions of the spectrums, and the harmonics are detected in the same lower frequency regions, relative to the sidebands detected in higher frequency regions of the spectrums.

Example 15. A system comprising one or more processors configured to perform the operations of:
receiving, from an accelerometer of a monitor, three vibration signals, an x-axis vibration signal, a y-axis vibration signal and a z-axis vibration signal, the monitor attached or in contact with an industrial machine, wherein the movements of the industrial machine, induces movements in the monitor causing the accelerometer to record the three vibration signals, the vibration signals initially received in a time-domain;
converting the vibration signals to frequency domain, generating x-axis spectrum, y-axis spectrum and z-axis spectrum;
for each spectrum, detecting frequency peaks;
for each spectrum, detecting harmonics of the frequency peaks;
for each spectrum, detecting sidebands of the frequency peaks;
for each spectrum, estimating an intermediary fundamental frequency, based on the peaks, harmonics and sidebands of the spectrum, generating x-axis, y-axis, and z-axis intermediary fundamental frequencies;
selecting a fundamental frequency, based on the x-axis, y-axis and z-axis intermediary fundamental frequencies; and
generating a rotation speed parameter, based on the selected fundamental frequency.

Example. 16. The system of Example 15, further comprising determining a confidence score, based at least in part on a degree of matching between the intermediary fundamental frequencies.

Example 17. The system of any one of Examples 15-16, further comprising:
designating each frequency peak as a candidate fundamental frequency;
generating a ratios vector for each frequency peak;
generating a vector of harmonics candidates for each frequency peak;
generating a vector of harmonics distances for each frequency peak;
choosing, based on a selected threshold, frequency peaks with low harmonics distances, as harmonics of the candidate fundamental frequency;
generating a matrix of harmonics series, based on the chosen harmonics;
assigning a score to each harmonics series; and
selecting the highest scored harmonics series as a representative harmonics series.

Example 18. The system any one of Examples 15-17, further comprising:
discretizing, via a fast Fourier Transform (FFT), each spectrum;
for each discretized spectrum, detecting a period of repetition of a pattern on the discretized spectrums, by computing a correlation of the discretized spectrum with a delayed version of the discretized spectrum, the delayed version generated, based on a delay factor; and
providing a sequence of correlation coefficients, as a function of the delay factor.

Example 19. The system any one of Examples 15-18, wherein detecting frequency peaks, harmonics and sidebands are constrained to a search space in the spectrums, based at least in part on an expected RPM value or range.

Example 20. The system of any one of Examples 15-19, further comprising performing failure analysis on the industrial machine, based at least in part on an RPM value, derived from the generated rotation speed parameter.

Example 21. The system of any one of Examples 15-20, wherein the frequency peaks in the spectrums are detected in lower frequency regions of the spectrums, and the harmonics are detected in the same lower frequency regions, relative to the sidebands detected in higher frequency regions of the spectrums.

## Claims

1. A method comprising:
receiving, from an accelerometer of a monitor, three vibration signals, an x-axis vibration signal, a y-axis vibration signal and a z-axis vibration signal, the monitor attached or in contact with an industrial machine, wherein the movements of the industrial machine, induces movements in the monitor causing the accelerometer to record the three vibration signals, the vibration signals initially received in a time-domain;
converting the vibration signals to frequency domain, generating x-axis spectrum, y-axis spectrum and z-axis spectrum;
for each spectrum, detecting frequency peaks;
for each spectrum, detecting harmonics of the frequency peaks;
for each spectrum, detecting sidebands of the frequency peaks;
for each spectrum, estimating an intermediary fundamental frequency, based on the peaks, harmonics and sidebands of the spectrum, generating x-axis, y-axis, and z-axis intermediary fundamental frequencies;
selecting a fundamental frequency, based on the x-axis, y-axis and z-axis intermediary fundamental frequencies; and
generating a rotation speed parameter, based on the selected fundamental frequency.

2. The method of claim 1 further comprising determining a confidence score, based at least in part on a degree of matching between the intermediary fundamental frequencies.

3. The method of claim 1, further comprising:
designating each frequency peak as a candidate fundamental frequency;
generating a ratios vector for each frequency peak;
generating a vector of harmonics candidates for each frequency peak;
generating a vector of harmonics distances for each frequency peak;
choosing, based on a selected threshold, frequency peaks with low harmonics distances, as harmonics of the candidate fundamental frequency;
generating a matrix of harmonics series, based on the chosen harmonics;
assigning a score to each harmonics series; and
selecting the highest scored harmonics series as a representative harmonics series.

4. The method of claim 1, further comprising:
discretizing, via a fast Fourier Transform (FFT), each spectrum;
for each discretized spectrum, detecting a period of repetition of a pattern on the discretized spectrums, by computing a correlation of the discretized spectrum with a delayed version of the discretized spectrum, the delayed version generated, based on a delay factor; and
providing a sequence of correlation coefficients, as a function of the delay factor.

5. The method of claim 1, wherein detecting frequency peaks, harmonics and sidebands are constrained to a search space in the spectrums, based at least in part on an expected RPM value or range.

6. The method of claim 1, further comprising performing failure analysis on the industrial machine, based at least in part on an RPM value, derived from the generated rotation speed parameter.

7. The method of claim 1, wherein the frequency peaks in the spectrums are detected in lower frequency regions of the spectrums, and the harmonics are detected in the same lower frequency regions, relative to the sidebands detected in higher frequency regions of the spectrums.

8. A non-transitory computer storage media that stores executable program instructions that, when executed by one or more computing devices, configure the one or more computing devices to perform operations comprising:
receiving, from an accelerometer of a monitor, three vibration signals, an x-axis vibration signal, a y-axis vibration signal and a z-axis vibration signal, the monitor attached or in contact with an industrial machine, wherein the movements of the industrial machine, induces movements in the monitor causing the accelerometer to record the three vibration signals, the vibration signals initially received in a time-domain;
converting the vibration signals to frequency domain, generating x-axis spectrum, y-axis spectrum and z-axis spectrum;
for each spectrum, detecting frequency peaks;
for each spectrum, detecting harmonics of the frequency peaks;
for each spectrum, detecting sidebands of the frequency peaks;
for each spectrum, estimating an intermediary fundamental frequency, based on the peaks, harmonics and sidebands of the spectrum, generating x-axis, y-axis, and z-axis intermediary fundamental frequencies;
selecting a fundamental frequency, based on the x-axis, y-axis and z-axis intermediary fundamental frequencies; and
generating a rotation speed parameter, based on the selected fundamental frequency.

9. The non-transitory computer storage media of 8 further comprising determining a confidence score, based at least in part on a degree of matching between the intermediary fundamental frequencies.

10. The non-transitory computer storage media of claim 8, further comprising:
designating each frequency peak as a candidate fundamental frequency;
generating a ratios vector for each frequency peak;
generating a vector of harmonics candidates for each frequency peak;
generating a vector of harmonics distances for each frequency peak;
choosing, based on a selected threshold, frequency peaks with low harmonics distances, as harmonics of the candidate fundamental frequency;
generating a matrix of harmonics series, based on the chosen harmonics;
assigning a score to each harmonics series; and
selecting the highest scored harmonics series as a representative harmonics series.

11. The non-transitory computer storage media of claim 8, further comprising:
discretizing, via a fast Fourier Transform (FFT), each spectrum;
for each discretized spectrum, detecting a period of repetition of a pattern on the discretized spectrums, by computing a correlation of the discretized spectrum with a delayed version of the discretized spectrum, the delayed version generated, based on a delay factor; and
providing a sequence of correlation coefficients, as a function of the delay factor.

12. The non-transitory computer storage media of claim 8, wherein detecting frequency peaks, harmonics and sidebands are constrained to a search space in the spectrums, based at least in part on an expected RPM value or range.

13. The non-transitory computer storage media of claim 8, further comprising performing failure analysis on the industrial machine, based at least in part on an RPM value, derived from the generated rotation speed parameter.

14. The non-transitory computer storage media of claim 8, wherein the frequency peaks in the spectrums are detected in lower frequency regions of the spectrums, and the harmonics are detected in the same lower frequency regions, relative to the sidebands detected in higher frequency regions of the spectrums.

15. A system comprising one or more processors configured to perform the operations of:
receiving, from an accelerometer of a monitor, three vibration signals, an x-axis vibration signal, a y-axis vibration signal and a z-axis vibration signal, the monitor attached or in contact with an industrial machine, wherein the movements of the industrial machine, induces movements in the monitor causing the accelerometer to record the three vibration signals, the vibration signals initially received in a time-domain;
converting the vibration signals to frequency domain, generating x-axis spectrum, y-axis spectrum and z-axis spectrum;
for each spectrum, detecting frequency peaks;
for each spectrum, detecting harmonics of the frequency peaks;
for each spectrum, detecting sidebands of the frequency peaks;
for each spectrum, estimating an intermediary fundamental frequency, based on the peaks, harmonics and sidebands of the spectrum, generating x-axis, y-axis, and z-axis intermediary fundamental frequencies;
selecting a fundamental frequency, based on the x-axis, y-axis and z-axis intermediary fundamental frequencies; and
generating a rotation speed parameter, based on the selected fundamental frequency.

16. The system of claim 15, further comprising determining a confidence score, based at least in part on a degree of matching between the intermediary fundamental frequencies.

17. The system of claim 15, further comprising:
designating each frequency peak as a candidate fundamental frequency;
generating a ratios vector for each frequency peak;
generating a vector of harmonics candidates for each frequency peak;
generating a vector of harmonics distances for each frequency peak;
choosing, based on a selected threshold, frequency peaks with low harmonics distances, as harmonics of the candidate fundamental frequency;
generating a matrix of harmonics series, based on the chosen harmonics;
assigning a score to each harmonics series; and
selecting the highest scored harmonics series as a representative harmonics series.

18. The system of claim 15, further comprising:
discretizing, via a fast Fourier Transform (FFT), each spectrum;
for each discretized spectrum, detecting a period of repetition of a pattern on the discretized spectrums, by computing a correlation of the discretized spectrum with a delayed version of the discretized spectrum, the delayed version generated, based on a delay factor; and
providing a sequence of correlation coefficients, as a function of the delay factor.

19. The system of claim 15, wherein detecting frequency peaks, harmonics and sidebands are constrained to a search space in the spectrums, based at least in part on an expected RPM value or range.

20. The system of claim 15, further comprising performing failure analysis on the industrial machine, based at least in part on an RPM value, derived from the generated rotation speed parameter.

21. The system of claim 15, wherein the frequency peaks in the spectrums are detected in lower frequency regions of the spectrums, and the harmonics are detected in the same lower frequency regions, relative to the sidebands detected in higher frequency regions of the spectrums.
